# EUROPEAN PATENT APPLICATION

(11) **EP 4 635 769 A1**
(43) Date of publication of application: **22.10.2025**
(21) Application number: 25169502.9
(22) Date of filing: 09.04.2025
(51) Int. Cl.: B60K 6/405, F16H 57/02

(54) **WORK VEHICLE**

(30) Priority: 17.04.2024 JP 2024066982
(71) Applicant: Kubota Corporation, Osaka-shi, Osaka 556-8601 (JP)
(72) Inventor: HIRASE, Yuji, SAKAI-SHI, OSAKA, 5900908 (JP); II, Tsunehiro, SAKAI-SHI, OSAKA, 5900908 (JP)
(74) Representative: Cabinet Beau de Loménie

(57) **Abstract**

A work vehicle includes a transmission case (11) that forms an electric transmission chamber (16) and a gear transmission chamber (17) located rearward of the electric transmission chamber (16), the gear transmission chamber (17) and the electric transmission chamber (16) being partitioned from each other. A front transmission shaft (70) is provided that extends frontward from the gear transmission section and transmits motive power to a front travel device. The transmission case (11) includes a tubular member (73) that forms a power transmission path (74) that passes through the electric transmission chamber (16) in the front-rear direction while being partitioned from the electric transmission chamber (16). The front transmission shaft (70) passes through the power transmission path (74).

## Description

### BACKGROUND OF THE INVENTION

### 1. Field of the Invention

The present invention relates to a work vehicle including a hybrid transmission.

### 2. Description of the Related Art

As shown in JP 2023-132979A, there is a work vehicle (tractor) that includes: an engine; a hybrid transmission that has an electric transmission section having a motor generator, and that has a gear transmission section having a gear transmission mechanism without a motor generator, the hybrid transmission being configured to change motive power from the engine and output the resulting motive power to a front travel device; a transmission case that forms an electric transmission chamber accommodating the electric transmission section and a gear transmission chamber accommodating the gear transmission mechanism, with the gear transmission chamber being located rearward of the electric transmission chamber, the gear transmission chamber and the electric transmission chamber being partitioned from each other; and a front transmission shaft (rotation shaft) that extends frontward from the gear transmission unit and transmits motive power to the front travel device (front wheel).

JP 2023-132979Ais an example of related art.

### SUMMARY OF THE INVENTION

In the above-described work vehicle, by partitioning the electric transmission chamber and the gear transmission chamber from each other, it is possible to store different types of lubricating oil in the electric transmission chamber and the gear transmission chamber, such as storing lubricating oil suitable for cooling a motor generator in the electric transmission chamber and storing lubricating oil suitable for lubricating the gear transmission mechanism in the gear transmission chamber.

In such a work vehicle, the front transmission shaft will not influence the partition between the electric transmission chamber and the gear transmission chamber if the front transmission shaft is disposed in such a manner as to extend toward the front of the body outside the electric transmission chamber. However, in this case, in order to provide a power transmission path through which the front transmission shaft passes outside the transmission case, it is necessary to change the shape of the transmission case, such as reducing the outer diameter of the part of the transmission case that forms the electric transmission chamber.

There is no need to change the shape of the transmission case if the front transmission shaft is disposed in such a manner as to pass through the electric transmission chamber and extend frontward. However, in this case, the front transmission shaft passes through a partition wall provided in the transmission case to partition the electric transmission chamber and the gear transmission chamber from each other. For this reason, an oil seal is interposed between the partition wall and the front transmission shaft to prevent the flow of lubricating oil between the electric transmission chamber and the gear transmission chamber. However, it is not possible to completely prevent the flow of lubricating oil due to the characteristics of the oil seal.

The present invention provides a work vehicle in which the front transmission shaft can be extended frontward from the gear transmission mechanism while eliminating the need to change the shape of the transmission case and preventing the flow of lubricating oil between the electric transmission chamber and the gear transmission chamber.

The work vehicle according to the present invention includes:
an engine; a hybrid transmission that has an electric transmission section having a motor generator and that has a gear transmission section having a gear transmission mechanism but not a motor generator, the hybrid transmission being configured to change motive power from the engine and output the resulting motive power to a front travel device; a transmission case that forms an electric transmission chamber accommodating the electric transmission section and a gear transmission chamber accommodating the gear transmission section, with the gear transmission chamber located rearward of the electric transmission chamber, the gear transmission chamber and the electric transmission chamber being partitioned from each other; and a front transmission shaft that extends frontward from the gear transmission portion and is configured to transmit motive power to the front travel device. The transmission case includes a tubular member forming a power transmission path that passes through the electric transmission chamber in a front-rear direction while being partitioned from the electric transmission chamber, and the front transmission shaft passes through the power transmission path.

According to this configuration, the front transmission shaft passes through the power transmission path that passes through the electric transmission chamber. Due to this, there is no need to provide a power transmission path outside the transmission case, and therefore there is no need to change the shape of the transmission case. Since the power transmission path is partitioned from the electric transmission chamber by the tubular member, direct communication between the electric transmission chamber and the gear transmission chamber, and communication between the electric transmission chamber and the gear transmission chamber via the power transmission path are prevented by the tubular member, thereby preventing the flow of lubricating oil between the electric transmission chamber and the gear transmission chamber. That is, it is possible to extend the front transmission shaft frontward from the gear transmission mechanism while eliminating the need to change the shape of the transmission case and preventing the flow of lubricating oil between the electric transmission chamber and the gear transmission chamber.

In the present invention,
it is preferable that the work vehicle further includes a partition wall partitioning the electric transmission chamber and the gear transmission chamber from each other, the partition wall including a rear support hole into which a rear portion of the tubular member is inserted for support, and an O-ring is interposed between the tubular member and the partition wall in the rear support hole.

According to this configuration, the gap between the tubular member and the partition wall is sealed by the O-ring, and therefore it is possible to prevent the flow of lubricating oil between the electric transmission chamber and the gear transmission chamber via the rear support hole.

In the present invention,
it is preferable that the work vehicle further includes a wall portion forming the electric transmission chamber of the transmission case, the wall portion including a front support hole into which a front portion of the tubular member is inserted for support, and an O-ring is interposed between the tubular member and the wall portion in the front support hole.

According to this configuration, the gap between the tubular member and the wall portion is sealed by the O-ring, and therefore leakage of lubricating oil from the electric transmission chamber via the front support hole can be prevented.

In the present invention,
it is preferable that the front transmission shaft is supported by the transmission case via bearings at a rear part located rearward of the tubular member and at a front part located frontward of the tubular member.

According to this configuration, the outer diameter of the tubular member can be made smaller while maintaining the required outer diameter of the front transmission shaft, compared to a case where a bearing is provided between the front transmission shaft and the tubular member. The volume required for installing the tubular member in the electric transmission chamber can be reduced by making the outer diameter of the tubular member smaller.

### BRIEF DESCRIPTION OF THE DRAWINGS

FIG. 1 is a side view of the entirety of a tractor as viewed from a left side.
FIG. 2 is a schematic diagram of power transmission to a front travel device and a rear travel device.
FIG. 3 is a cross-sectional view showing an arrangement of a first front transmission shaft.

### DETAILED DESCRIPTION OF THE PREFERRED EMBODIMENTS

Hereinafter, an embodiment of the present invention will be described with reference to the drawings.

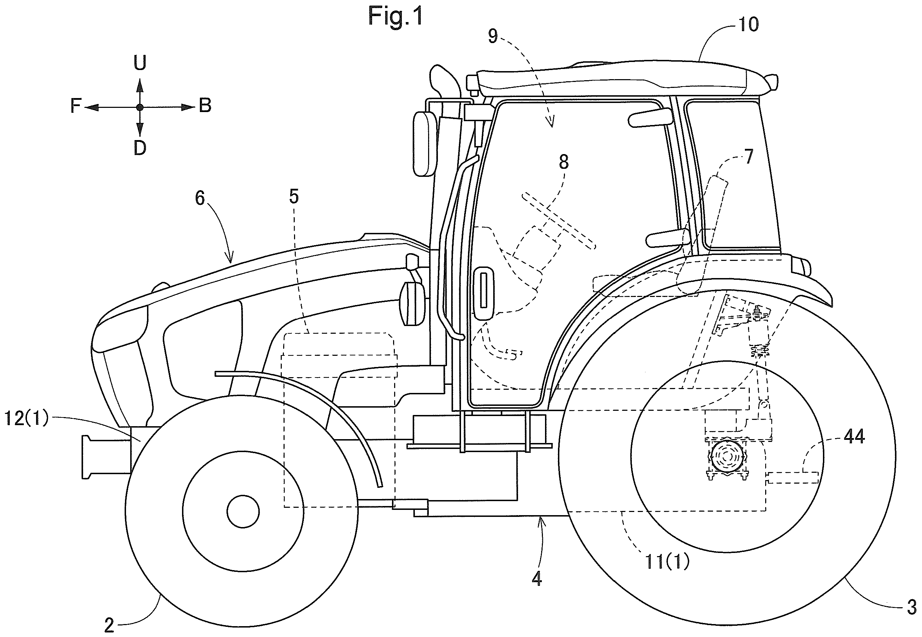

Note that in the following description, with regard to the travel body of a tractor (an example of a "work vehicle"), the direction of arrow F shown in FIG. 1 is the "body frontward direction", the direction of arrow B is the "body rearward direction", the direction of arrow U is the "body upward direction", the direction of arrow D is the "body downward direction", the direction toward the front surface of the page in FIG. 1 is the "body leftward direction", and the direction toward the back surface of the page in FIG. 1 is the "body rightward direction".

### Overall Configuration of Tractor

As shown in FIG. 1, the tractor includes a body frame 1, a pair of left and right front travel devices 2 steerably and drivably provided at the front of the body frame 1, and a travel body 4 having a pair of left and right rear travel devices 3 drivably provided at the rear of the body frame 1. In this embodiment, the front travel device 2 is a front tire wheel, and the rear travel device 3 is a rear tire wheel. Instead of tire wheels, mini crawler travel devices can be used. The front of the travel body 4 is provided with a motor section 6 having an engine 5. The rear of the travel body 4 is provided with a driver's seat 7 and a driving section 9 having a steering wheel 8 for steering the front travel device 2. The driving section 9 includes a cabin 10 that covers a passenger space. The rear of the travel body 4 is provided with a link mechanism (not shown) that connects a work device such as a rotary tiller (not shown) in such a manner as to be raisable and lowerable, and a power retrieval shaft 44 that retrieves motive power from the engine 5 and transmits the retrieved motive power to the connected work device. The body frame 1 is constituted by an engine 5, a transmission case 11 coupled to the rear of the engine 5, and a front frame 12 coupled to the lower part of the engine 5.

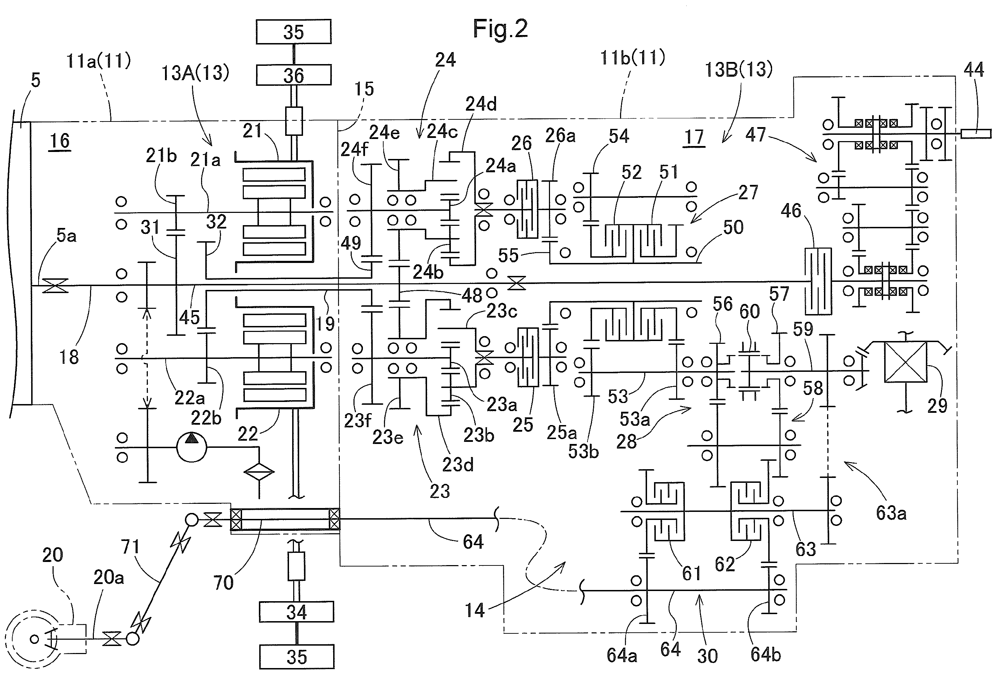

As shown in FIG. 2, the transmission case 11 extends rearward from the rear of the engine 5 along a body front-rear direction. The transmission case 11 accommodates a hybrid transmission 13, and motive power from the engine 5 is subjected to changing by the hybrid transmission 13 and output from the hybrid transmission 13 to the front travel device 2 and the rear travel device 3.

### Hybrid Transmission

As shown in FIG. 2, the hybrid transmission 13 includes an electric transmission section 13A and a gear transmission section 13B located rearward of the electric transmission section 13A.

As shown in FIG. 2, the electric transmission section 13A is accommodated in an electric transmission chamber 16 formed in a front portion 11a of the transmission case 11. The gear transmission section 13B is accommodated in a gear transmission chamber 17 formed in the rear portion 11b of the transmission case 11. The electric transmission chamber 16 is formed by a peripheral wall portion located at the front portion 11a of the transmission case 11 and a partition wall 15 provided inside the transmission case 11. The gear transmission chamber 17 is formed by a peripheral wall portion located at the rear portion 11b of the transmission case 11 and the partition wall 15. The gear transmission chamber 17 is located rearward of the electric transmission chamber 16. The electric transmission chamber 16 and the gear transmission chamber 17 are partitioned from each other by the partition wall 15. It is possible to store different types of lubricating oil in the electric transmission chamber 16 and the gear transmission chamber 17, such as the electric transmission chamber 16 storing lubricating oil suitable for cooling motor generators 21 and 22 and the gear transmission chamber 17 storing lubricating oil suitable for lubricating a gear transmission mechanism 14.

### Electric Transmission Section

As shown in FIG. 2, the electric transmission section 13A has the two motor generators 21 and 22. A battery 35 is connected to a first motor generator 21, which is one of the two motor generators 21 and 22, via a first inverter 36. A battery 35 is connected to a second motor generator 22, which is the other of the two motor generators 21 and 22, via a second inverter 34.

### Gear Transmission Section

As shown in FIG. 2, the gear transmission section 13B has the gear transmission mechanism 14 but no motor generator. The gear transmission mechanism 14 includes two planetary-gear shifting portions 23 and 24, a forward and reverse switching device 27, an auxiliary gear shifting device 28, and a front transmission device 30.

### Planetary-Gear Shifting Portion

One planetary-gear shifting portion 23 of the two planetary-gear shifting portions 23 and 24 includes a sun gear 23a, a planetary gear 23b, a carrier 23c, and an internal gear 23d. A first input gear 23f coupled to the sun gear 23a is coupled to a rotor gear 22b of the second motor generator 22 via a transmission gear 49, a transmission shaft 19, and a transmission gear 32. The rotor gear 22b is provided on a rotor shaft 22a of the second motor generator 22. A second input gear 23e coupled to the internal gear 23d is coupled to an input shaft 18 via a transmission gear 48 and a center shaft 45. The input shaft 18 is an input shaft of the hybrid transmission 13 and is coupled to an output shaft 5a of the engine 5.

One of the planetary-gear shifting portions 23 is a low-speed planetary-gear shifting portion in which the sun gear 23a is driven by the output of the second motor generator 22, the internal gear 23d is driven by the output of the engine 5, the outputs of the second motor generator 22 and the engine 5 are combined, and the combined motive power is transmitted from the carrier 23c to a low-speed output clutch 25.

The other planetary-gear shifting portion 24 of the two planetary-gear shifting portions 23 and 24 includes a sun gear 24a, a planetary gear 24b, a carrier 24c, and an internal gear 24d. A first input gear 24f coupled to the sun gear 24a is coupled to a rotor gear 22b of the second motor generator 22 via a transmission gear 49, a transmission shaft 19, and a transmission gear 32. A second input gear 24e coupled to the carrier 24c is coupled to the input shaft 18 via the transmission gear 48 and the center shaft 45.

The other planetary-gear shifting portion 24 is a high-speed planetary-gear shifting portion in which the sun gear 24a is driven by the output of the second motor generator 22, the carrier 24c is driven by the output of the engine 5, the outputs of the second motor generator 22 and the engine 5 are combined, and combined motive power that is faster than the combined motive power of the planetary-gear shifting portion 23 is transmitted from the internal gear 24d to the high-speed output clutch 26.

As shown in FIG. 2, the rotor shaft 21a of the first motor generator 21 and the input shaft 18 of the hybrid transmission 13 are coupled to each other via a rotor shaft gear 21b and a transmission gear 31. When the motive power from the engine 5 is subjected to changing by the second motor generator 22 and the gear transmission mechanism 14 and is output from the gear transmission mechanism 14 to the front travel device 2 and the rear travel device 3 to drive the front travel device 2 and the rear travel device 3, the first motor generator 21 is driven by the motive power from the engine 5 to generate electricity. However, in the planetary-gear shifting portion 23, the internal gear 23d can also be driven by the output of the first motor generator 21, and in the planetary-gear shifting portion 24, the carrier 24c can also be driven by the output of the first motor generator 21. That is, the first motor generator 21 mainly functions as an electricity generator, but can also function as an electric motor that drives the front travel device 2 and the rear travel device 3. The second motor generator 22 mainly functions as an electric motor for driving the front travel device 2 and the rear travel device 3, but also functions as an electricity generator during deceleration.

### Forward and Reverse Switching Device

As shown in FIG. 2, the forward and reverse switching device 27 includes an input shaft 50 and an output shaft 53 positioned parallel to the input shaft 50. The input shaft 50 includes a forward clutch 51 and a reverse clutch 52. A forward transmission gear mechanism 53a is provided between the forward clutch 51 and the output shaft 53, and a reverse transmission gear mechanism 53b is provided between the reverse clutch 52 and the output shaft 53. The reverse transmission gear mechanism 53b includes a reverse rotation gear 54.

In the forward and reverse switching device 27, the low-speed combined motive power is input from the output gear 25a of the low-speed output clutch 25 to the input shaft 50 via the transmission gear 55, and the high-speed combined motive power is input from the output gear 26a of the high-speed output clutch 26 to the input shaft 50 via the transmission gear 55. The forward clutch 51 is engaged to switch to a forward travel state. When switched to the forward travel state, the motive power of the input shaft 50 is converted into forward travel power and transmitted to the output shaft 53 by the forward clutch 51 and the forward transmission gear mechanism 53a. The reverse clutch 52 is engaged to switch to a reverse travel state. When switched to the reverse travel state, the motive power of the input shaft 50 is converted into reverse travel power and transmitted to the output shaft 53 by the reverse clutch 52 and the reverse transmission gear mechanism 53b.

### Auxiliary Gear Shifting Device

As shown in FIG. 2, the auxiliary gear shifting device 28 includes an input gear 56 provided at the end of the output shaft 53 of the forward and reverse switching device 27, and an auxiliary gear shifting output shaft 59 located on the same axis as the output shaft 53 of the forward and reverse switching device 27. A low-speed transmission gear mechanism 58 is provided spanning between the input gear 56 and the auxiliary gear shifting output shaft 59. The low-speed transmission gear mechanism 58 includes a transmission gear 57 supported on the auxiliary gear shifting output shaft 59 in such a manner as to be capable of relative rotation. The clutch gear 60 is provided between the transmission gear 57 and the input gear 56.

In the auxiliary gear shifting device 28, the clutch gear 60 is shifted to the high-speed side to switch to the high-speed state. Upon being switched to the high-speed state, the input gear 56 and the auxiliary gear shifting output shaft 59 are coupled by the clutch gear 60, and the motive power transmitted from the forward and reverse switching device 27 to the input gear 56 is transmitted to the auxiliary gear shifting output shaft 59 via the clutch gear 60 as high-speed motive power. The clutch gear 60 is shifted to the low-speed side to switch to the low speed state . Upon being switched to the low-speed state, the transmission gear 57 and the auxiliary gear shifting output shaft 59 are coupled to each other by the clutch gear 60, and the motive power transmitted from the forward and reverse switching device 27 to the input gear 56 is transmitted to the auxiliary gear shifting output shaft 59 via the low-speed transmission gear mechanism 58 and the clutch gear 60 as low-speed motive power.

The motive power of the auxiliary gear shifting output shaft 59 is transmitted from the auxiliary gear shifting output shaft 59 to a rear differential mechanism 29. The motive power of the auxiliary gear shifting output shaft 59 is transmitted to the input shaft 63 of the front transmission device 30 via a gear transmission mechanism 63a.

### Front Transmission Device

As shown in FIG. 2, the front transmission device 30 includes the input shaft 63 coupled to the auxiliary gear shifting output shaft 59 via the gear transmission mechanism 63a, and the output shaft 64 positioned in parallel to the input shaft 63. The input shaft 63 is provided with a constant speed clutch 61 and an acceleration clutch 62. A constant speed transmission gear mechanism 64a is provided spanning between the constant speed clutch 61 and the output shaft 64, and an acceleration transmission gear mechanism 64b is provided spanning between the acceleration clutch 62 and the output shaft 64.

In the front transmission device 30, upon engaging the constant speed clutch 61, a switch is made to constant speed transmission. Upon being switched to constant speed transmission, the motive power transmitted from the auxiliary gear shifting device 28 to the input shaft 63 is transmitted to the output shaft 64 via the constant speed clutch 61 and the constant speed transmission gear mechanism 64a, and is output from the output shaft 64 toward the front travel device 2. The output in this case is motive power that makes the peripheral speed of the front travel device 2 the same as the peripheral speed of the rear travel device 3. Upon engaging the acceleration clutch 62, a switch is made to an acceleration state. Upon being switched to the acceleration state, the motive power transmitted from the auxiliary gear shifting device 28 to the input shaft 63 is transmitted to the output shaft 64 via the acceleration clutch 62 and the acceleration transmission gear mechanism 64b, and is output from the output shaft 64 toward the front travel device 2. The output in this case is motive power that makes the peripheral speed of the front travel device 2 faster than the peripheral speed of the rear travel device 3.

### Front Transmission Shaft

As shown in FIG. 2, the transmission case 11 includes a first front transmission shaft 70 extending frontward from the gear transmission section 13B, the first front transmission shaft 70 and the input shaft 20a of the front differential mechanism 20 are coupled by a second front transmission shaft 71 located outside the transmission case 11, and the motive power output by the gear transmission section 13B toward the front travel device 2 is transmitted to the front differential mechanism 20 by the first front transmission shaft 70 and the second front transmission shaft 71.

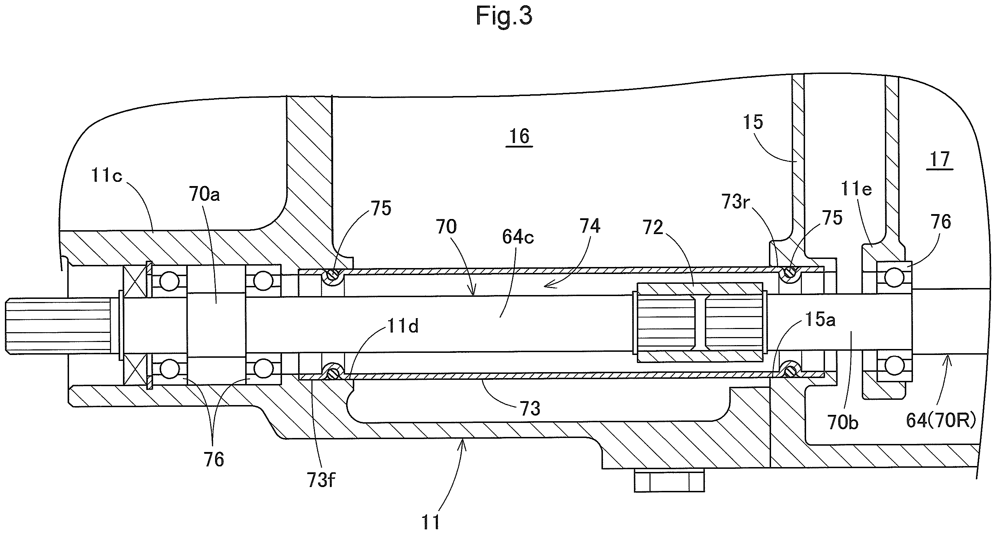

More specifically, as shown in FIG. 3, the first front transmission shaft 70 is constituted by the output shaft 64 of the front transmission device 30 and an extended output shaft 64c coupled to the output shaft 64 by a coupling member 72. The output shaft 64 forms a rear portion 70R of the first front transmission shaft 70.

As shown in FIG. 3, the transmission case 11 includes a tubular member 73 passing through the electric transmission chamber 16 in the front-rear direction, and the tubular member 73 forms a power transmission path 74 partitioned from the electric transmission chamber 16. In this embodiment, the tubular member 73 has a circular transverse cross-sectional shape and is made of metal. The transverse cross-sectional shape of the tubular member 73 may be a non-circular shape, such as a hexagon or a rectangle. In addition, the tubular member 73 may be made of a non-metal material such as resin.

More specifically, as shown in FIG. 3, the partition wall 15 provided in the transmission case 11 includes a rear support hole 15a passing through the partition wall 15 in the front-rear direction, and a rear portion 73r of the tubular member 73 is supported by the partition wall 15 due to the rear portion 73r being inserted into the rear support hole 15a. A wall portion 11c of the transmission case 11 that forms the electric transmission chamber 16 includes a front support hole 11d passing through the wall portion 11c in the front-rear direction, and the front portion 73f of the tubular member 73 is supported by the wall portion 11c due to the front portion 73f being inserted into the front support hole 11d. As a result, the tubular member 73 forms the power transmission path 74 that is partitioned from the electric transmission chamber 16. In addition, the electric transmission chamber 16 and the gear transmission chamber 17 are partitioned from each other by the tubular member 73.

As shown in FIG. 3, the first front transmission shaft 70 is arranged to pass from the gear transmission chamber 17 through the rear support hole 15a into the power transmission path 74, pass through the power transmission path 74, and exit frontward from the front support hole 11d to the outside of the transmission case 11 to be coupled to the second front transmission shaft 71.

As shown in FIG. 3, a sealing O-ring 75 is interposed between the tubular member 73 and the partition wall 15 in the rear support hole 15a. In the front support hole 11d, a sealing O-ring 75 is interposed between the tubular member 73 and the wall portion 11c.

As shown in FIG. 3, a bearing 76 is provided between a front part 70a of the first front transmission shaft 70, which is located frontward of the tubular member 73, and a wall portion 11c of the transmission case 11. A bearing 76 is provided between a rear part 70b of the first front transmission shaft 70, which is located rearward of the tubular member 73, and a support portion 11e provided on the transmission case 11. The first front transmission shaft 70 is supported by the transmission case 11 via the bearings 76 at the front part 70a located frontward of the tubular member 73 and at a rear part 70b located rearward of the tubular member 73.

### Work Power Transmission Device

As shown in FIG. 1, the rear of the transmission case 11 is provided with the power retrieval shaft 44 that retrieves motive power from the engine 5 and transmits the retrieved motive power to a coupled work device. As shown in FIG. 2, the motive power of the output shaft 5a of the engine 5 is transmitted to the power retrieval shaft 44 via the input shaft 18, the center shaft 45, the work clutch 46, and the work transmission device 47.

### Other Embodiments

(1) In the above-described embodiment, an example was shown in which two motor generators 21 and 22 are provided. However, it is also possible to include only one motor generator or three or more motor generators.
(2) In the above-described embodiment, an example was shown in which the gear transmission mechanism 14 has two planetary-gear shifting portions 23 and 24. However, the gear transmission mechanism 14 may also have only one planetary-gear shifting portion or three or more planetary-gear shifting portions. In addition, the gear transmission mechanism 14 need not include a planetary-gear shifting portion.
(3) In the above-described embodiment, an example was shown in which the O-rings 75 are provided. However, the O-rings 75 need not be provided.
(4) In the above-described embodiment, an example was shown in which the bearings 76 are provided in the front part 70a and the rear part 70b of the first front transmission shaft 70. However, there is no limitation to this. The bearings 76 need not be provided in the front part 70a and the rear part 70b, and a bearing may be provided between the tubular member 73 and the first front transmission shaft 70.

### Industrial Applicability

The present invention can be applied to a work vehicle including a hybrid transmission having an electric transmission section and a gear transmission section.

### LIST OF REFERENCE SIGNS

- 2: Front travel device
- 5: Engine
- 11: Transmission case
- 11c: Wall portion
- 11d: Front support hole
- 13b: Shielding wall portion
- 13: Hybrid transmission
- 13A: Electric transmission section
- 13B: Gear transmission section
- 14: Gear transmission mechanism
- 15: Partition wall
- 15a: Rear support hole
- 16: Electric transmission section
- 17: Gear transmission section
- 21: Motor generator
- 22: Motor generator
- 70: First front transmission shaft (front transmission shaft)
- 70a: Front part
- 70b: Rear part
- 73: Tubular member
- 73r: Rear portion
- 73f: Front portion
- 75: O-ring
- 76: Bearing

## Claims

1. A work vehicle, comprising:
an engine (5);
a hybrid transmission (13) that has an electric transmission section (13A) having a motor generator (21, 22) and that has a gear transmission section (13B) having a gear transmission mechanism (14) but not a motor generator (21, 22), the hybrid transmission (13) being configured to change motive power from the engine (5) and output the resulting motive power to a front travel device (2);
a transmission case (11) that forms an electric transmission chamber (16) accommodating the electric transmission section (13A) and a gear transmission chamber (17) accommodating the gear transmission section (13B), with the gear transmission chamber (17) located rearward of the electric transmission chamber (16), the gear transmission chamber (17) and the electric transmission chamber (16) being partitioned from each other; and
a front transmission shaft (70) that extends frontward from the gear transmission portion (13B) and is configured to transmit motive power to the front travel device (2),
wherein the transmission case (11) includes a tubular member (73) forming a power transmission path (74) that passes through the electric transmission chamber (16) in a front-rear direction while being partitioned from the electric transmission chamber (16), and
the front transmission shaft (70) passes through the power transmission path (74).

2. The work vehicle according to claim 1, further comprising
a partition wall (15) partitioning the electric transmission chamber (16) and the gear transmission chamber (17) from each other, the partition wall (15) including a rear support hole (15a) into which a rear portion (73r) of the tubular member (73) is inserted for support,
wherein an O-ring (75) is interposed between the tubular member (73) and the partition wall (15) in the rear support hole (15a).

3. The work vehicle according to claim 1 or 2, further comprising
a wall portion (11c) forming the electric transmission chamber (16) of the transmission case (11), the wall portion (11c) including a front support hole (11d) into which a front portion (73f) of the tubular member (73) is inserted for support,
wherein an O-ring (75) is interposed between the tubular member (73) and the wall portion (11c) in the front support hole (11d).

4. The work vehicle according to any one of claims 1 to 3,
wherein the front transmission shaft (70) is supported by the transmission case (11) via bearings (76) at a rear part (70b) located rearward of the tubular member (73) and at a front part (70a) located frontward of the tubular member (73).
